# FASCICULE DE BREVET EUROPEEN

(11) **EP 1 187 678 B1**
(45) Date de publication et mention de la délivrance du brevet: **20.09.2006**
(21) Numéro de dépôt: 00951631.1
(22) Date de dépôt: 21.06.2000
(51) Int. Cl.: B01L 3/00, C12Q 1/68

(54) **DISPOSITIF DE MISE EN OEUVRE D'UNE CARTE D'ANALYSE, CARTE D'ANALYSE ET PROCEDE LES METTANT EN OEUVRE**
VORRICHTUNG ZUR VERWENDUNG EINER TESTKARTE, TESTKARTE UND VERFAHREN
DEVICE FOR IMPLEMENTING AN ANALYSIS PACK, ANALYSIS PACK AND METHOD USING SAME

(30) Priorité: 22.06.1999 FR 9908117
(43) Date de publication de la demande: 20.03.2002
(73) Titulaire: Biomerieux S.A., 69280 Marcy l'Etoile (FR)
(72) Inventeur: COLIN, Bruno, F-69280 Marcy l'Etoile (FR); DACHAUD, Jacques, F-25000 Besançon (FR); PRIVAT, Marie, F-69560 Saint Romain en Gal (FR); PARIS, Cécile, F-69280 Marcy L'Etoile (FR)
(74) Mandataire: de Zeeuw, Johan Diederick
(86) Numéro de dépôt international: PCT/FR2000/001718
(87) Numéro de publication internationale: WO 2000/078452

(56) Documents cités:
- EP-A- 0 402 994
- EP-A- 0 875 291
- US-A- 4 390 499
- US-A- 4 607 526
- US-A- 5 660 370
- US-A- 5 856 174
- US-A- 5 863 502
- US-A- 5 863 801
- ZDEBLICK ET AL.: "thermopneumatically actuated microvalves and integrated electrofluidic circuits" SOLID-STATE SENSOR AND ACTUATOR WORKSHOP, 13 - 16 juin 1994, pages 251-255, XP000889674 usa

## Description

La présente invention concerne un dispositif de mise en oeuvre d'une carte d'analyse au sein de laquelle des chaînes réactionnelles et des transferts de fluides sont réalisés sous l'effet de moyens de contrôle internes à la carte ; ladite carte comporte au moins deux chaînes réactionnelles en parallèle, chaque chaîne étant constituée d'au moins deux transferts de fluides en série. L'invention concerne également une carte d'analyse et le procédé mettant en oeuvre le dispositif et la carte.

L'invention concerne également un système de transfert d'un flux fluidique entre deux dispositifs ou cartes, ainsi qu'un procédé de transfert d'un flux fluidique entre deux dispositifs ou cartes, telles que décrites ci-dessus.

Plus précisément, l'invention concerne un dispositif ou consommable, par exemple constitué par une carte, permettant de conduire une réaction ou au moins deux réactions parallèlement en son sein, qui est constitué par une surface supérieure et une surface inférieure reliées l'une à l'autre par un bord. Chacune des réactions, isolées physiquement l'une de l'autre, s'effectue dans au moins un canal indépendant dans lequel un flux fluidique peut être généré par des moyens de transfert.

*L'état de la technique est constitué par le document US-A-4,585,623 qui a pour objet un appareil pour réaliser rapidement à un endroit unique des essais chimiques ou immunochimiques. Cet appareil comporte un corps en plastique moulé pouvant être miniaturisé, et présentant plusieurs tubes contenant des réactifs, un tube contenant l'échantillon et un tube de plus petite taille recevant la réaction. Chaque tube étant associé à un piston, il est possible d'insérer l'appareil dans un automate programmable.*

Cet appareil est relativement volumineux même si la miniaturisation est possible, car il faut prévoir la position dudit appareil ainsi que des différentes bielles qui vont permettre d'actionner les pistons. De plus, il n'est possible d'effectuer qu'une seule réaction avec un tel appareil, si plusieurs réactions doivent être réalisées, il faudra prévoir plusieurs appareils et également du temps pour charger ceux-ci avec les réactifs et échantillons adéquats.

*Le document WO-A-97*/*27324 concerne une cassette pour conduire en parallèle des réactions qui comporte une ouverture d'entrée et une ouverture de sortie pour le transfert du ou des échantillons à introduire dans la cassette. Certaines zones de la cassette sont de construction particulière (chambre de Bursapak, soupape à piston, valve à bille), elles permettent, sous l'action d'une force extérieure continue, de maintenir un canal fermé.*

Toutefois, cette construction comporte de nombreux inconvénients. Les deux inconvénients principaux résident, d'une part, dans les risques de contamination interne de la cassette du fait que celle-ci est stockée avant son utilisation à la pression atmosphérique, et d'autre part, dans les moyens qui actionnent la cassette, au niveau des chambres de Bursapak, des soupapes à piston et des valves à bille, qui nécessitent une présence constante, dans le temps et l'intensité, pour maintenir les canaux concernés en position fermée. Cette contamination et/ou le non-maintien en position fermée desdits canaux peuvent entraîner des erreurs ultérieures lors de l'utilisation de la cassette. Enfin ledit maintien en position fermée nécessite un appareillage lourd et onéreux qui rend le coût d'utilisation de telles cassettes prohibitif.

Le document US-A-5863801 décrit une carte d'analyse avec plusieurs chaînes réactionnelles comprenant une pluralité de vannes.

Les chaînes réactionnelles permettent d'obtenir une réaction d'une seule et même nature sur les différentes chaînes réactionnelles. Ainsi, une telle carte d'analyse peut être utilisée pour comparer les résultats obtenus aux témoins positifs et négatifs, les conditions réactionnelles étant similaires. En revanche, un tel dispositif n'autorise pas d'échanges entre les chaînes réactionnelles. En outre, cette carte d'analyse ne comporte qu'une chambre réactionnelle par chaîne réactionnelle, les autres compartiments étant dédiés au stockage des réactifs. En conséquence, aucune réaction ne se produisant au niveau des compartiments de stockage, il est impossible d'obtenir plusieurs réactions sur une même chaîne réactionnelle.

Conformément à la présente invention, le dispositif proposé solutionne l'ensemble des problèmes ci-dessus énumérés en proposant un consommable ou carte d'analyse fiable peu onéreuse à fabriquer et particulièrement simple à utiliser, puisque les vannes une fois actionnées ne nécessitent pas d'action extérieure pour être maintenues dans cette position.

A cet effet la présente invention concerne un dispositif de mise en oeuvre d'une carte d'analyse selon le présente invention, qui comporte au moins un actionneur par chaîne réactionnelle de la carte, et tous les actionneurs sont à une distance constante les uns des autres, et préférentiellement les actionneurs, portés par une même rampe, sont équidistants, le dispositif comporte des moyens d'avancement de la carte par rapport aux actionneurs, et/ou il comporte des moyens d'avancement desdits actionneurs par rapport à ladite carte, et chaque actionneur peut être actionné indépendamment des autres.

Selon une variante de réalisation, les actions des actionneurs sur la carte s'effectuent sensiblement perpendiculairement :
- à la surface de ladite carte, où les actionneurs agissent, et/ou
- aux mouvements de la carte et de l'actionneur, l'un par rapport à l'autre.

Il est également décrit un dispositif où l'ensemble des actionneurs est monté sur une seule rampe et chaque actionneur peut-être actionné indépendamment des autres.

Selon une variante de réalisation, la rampe est sensiblement rectiligne, sensiblement perpendiculaire aux mouvements des actionneurs, décrits précédemment, et/ou sensiblement perpendiculaire aux mouvements de la carte et/ou du dispositif par rapport à la carte.

La présente invention concerne également une carte d'analyse au sein de laquelle des chaînes réactionnelles et des transferts de fluides sont realisés sous l'effet de moyens de contrôle internes à la carte ; ladite carte comporte :
- au moins deux chaînes réactionnelles en parallèle, chaque chaîne étant constituée d'au moins deux transferts de fluides en série,
- au moins deux vannes par chaîne réactionnelle, les vannes permettant de contrôler les transferts de fluides en série au sein d'un canal, d'un niveau initial (A, B, C) vers un niveau subséquent (B, C, D), chaque niveau correspondant à au moins un traitement ;
chaque vanne est constituée d'au moins un moyen qui peut être déformé par un actionneur et entraîner directement ou indirectement la fermeture dudit canal, tel qu'un film flexible recouvrant tout ou partie de la face supérieure et/ou inférieure de la carte d'analyse, et une translation de la position des deux vannes appartenant à deux chaînes réactionnelles différentes et permettant le transfert de fluides d'un premier niveau (A ou B) vers un deuxième niveau (B ou C) permet d'obtenir la position de deux vannes subséquentes appartenant à ces deux chaînes réactionnelles différentes et permettant le transfert de fluides du deuxième niveau (B ou C) vers un troisième niveau (C ou D), de sorte que :
- la distance entre deux vannes appartenant à ces deux chaînes réactionnelles est constante, quel que soit le niveau initial (A, B, C) à partir duquel le transfert de fluides contrôlé par lesdites vannes est effectué ;
- la distance entre les deux vannes appartenant à une même chaîne réactionnelle est constante d'une chaîne réactionnelle à l'autre.

La présente invention concerne également une carte d'analyse selon la revendication 1 mise en oeuvre par le dispositif ci-dessus.

Selon un mode de réalisation, l'implantation des moyens de contrôle d'une même chaîne réactionnelle est sensiblement rectiligne, et l'implantation des moyens de contrôle de transferts de fluides, associés à une position de la rampe, définie précédemment, est identique à l'implantation des moyens de contrôle associés à une autre position de ladite rampe.

Dans le cas où chaque chaîne réactionnelle comprend au moins un compartiment de départ, un compartiment d'arrivée, un canal fluidique reliant les deux compartiments, une vanne faisant office de moyen de contrôle positionnée sur ledit canal fluidique, ladite vanne permettant de contrôler sur ledit canal, un flux fluidique généré par un moyen de transfert, la disposition des vannes sur la carte d'analyse permet le passage dudit flux fluidique entre le compartiment de départ et le compartiment d'arrivée simultanément dans l'ensemble des chaînes réactionnelles.

Selon un mode de réalisation, les vannes sont disposées selon un axe sensiblement rectiligne et à une distance constante les unes des autres, préférentiellement les vannes sont équidistantes.

Selon un mode de réalisation, l'axe est perpendiculaire à un coté de la carte d'analyse.

Selon un mode de réalisation, chaque vanne est constituée d'au moins un moyen qui peut être déformé et entraîner la fermeture directement ou indirectement du canal, tel qu'un film flexible recouvrant tout ou partie de la face supérieure et/ou inférieure de la carte d'analyse.

Selon un mode de réalisation, au moins un des compartiments est associé à au moins un volume tampon, et le volume tampon est situé sur la face opposée de la carte d'analyse par rapport au compartiment qui lui est associé.

Selon un mode de réalisation, chaque compartiment qui contient au moins un réactif, devant être mis en contact avec l'échantillon ou un aliquote de cet échantillon, comporte des moyens de maintien en position d'une pastille, constituée d'un agglomérat du ou des réactifs, le moyen de maintien en position étant à distance du fond dudit compartiment.

L'invention concerne enfin un procédé mettant en oeuvre le dispositif et la carte ci-dessus évoqués, il consiste à effectuer les étapes suivantes :
- générer une variation de pression au sein de ladite carte par rapport à l'extérieur, et préférentiellement une dépression,
- introduire au moins un échantillon à analyser dans la carte,
- faire transiter chaque échantillon ou aliquote d'échantillon en vue de l'analyse, et
- faire sortir de la ou conserver dans ladite carte une partie de chaque échantillon introduit.

Selon une variante, l'analyse consiste à effectuer les opérations suivantes :
- dénaturation des ADN et/ou ARN,
- capture des ADN et/ou ARN sur des particules magnétiques,
- amplification desdits ADN et/ou ARN, et
- lecture de chaque échantillon ou aliquote d'échantillon en vue de savoir si l'amplification a eu lieu.

Selon une variante, l'analyse consiste préalablement à effectuer un extraction, par lyse cellulaire des cellules contenues dans un échantillon prélevé.

Selon une variante, l'analyse consiste préalablement à la dénaturation et après l'extraction, à effectuer une purification de l'échantillon extrait.

Selon une variante, l'analyse consiste après l'amplification à analyser la nature des transcrits par hybridation sur une biopuce.

Selon une variante et durant l'analyse, la carte fonctionne en position inclinée ou verticale.

Préférentiellement, la carte d'analyse se déplace pendant les différentes étapes et/ou opérations de manière séquentielle.

Toujours préférentiellement, la carte se déplace suivant deux axes perpendiculaires pour mettre en regard les vannes et les moyens d'actionnement des vannes.

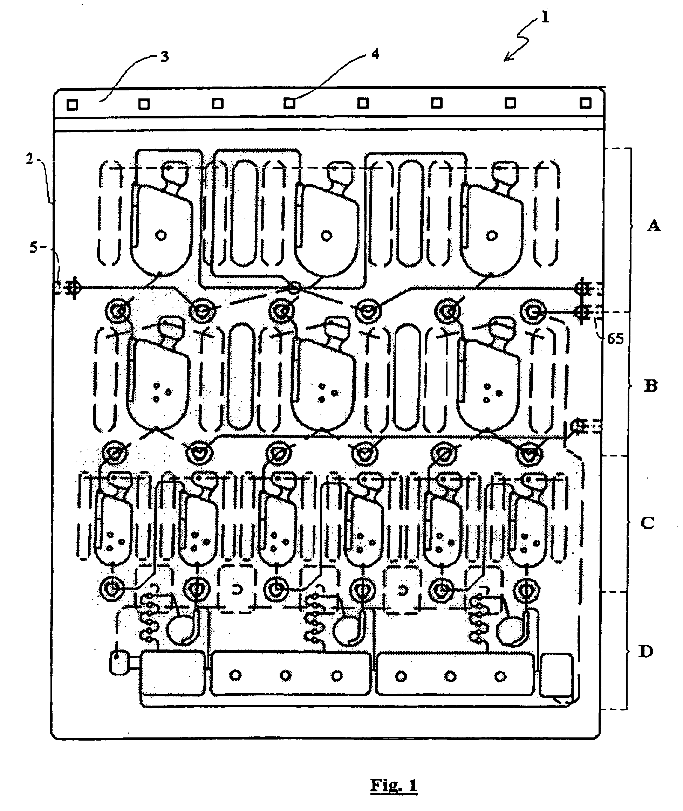

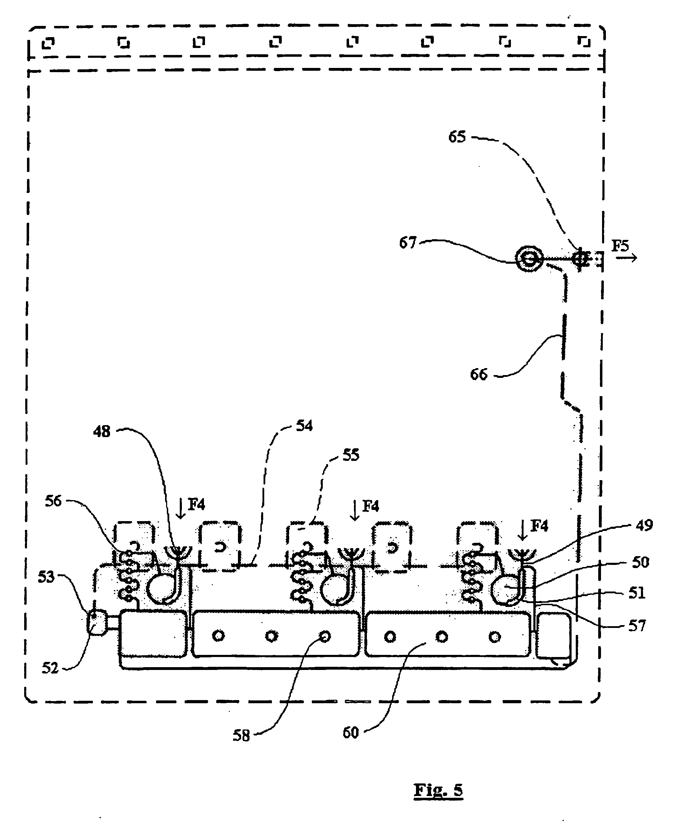

Les figures ci-jointes sont données à titre indicatif et n'ont aucun caractère limitatif quant à la portée des revendications. Ces figures permettront de mieux comprendre la présente invention.
La figure 1 représente une vue de face d'une carte d'analyse selon l'invention.
La figure 2 représente une vue de face identique à la figure 1, mais mettant en évidence le premier niveau de la carte, qui constitue le niveau de dénaturation des ADN et/ou ARN issus de l'extraction, et éventuellement de la purification.
La figure 3 représente une vue de face identique à la figure 1, mais mettant en évidence le deuxième niveau de la carte, qui constitue le niveau de capture des ADN et/ou ARN par les particules magnétiques et leur lavage.
La figure 4 représente une vue de face identique à la figure 1, mais mettant en évidence le troisième niveau de la carte, qui constitue le niveau d'amplification desdits ADN et/ou ARN.
Enfin, la figure 5 représente une vue de face identique à la figure 1, mais mettant en évidence le quatrième niveau de la carte, qui constitue le niveau de lecture de la réalisation de l'amplification et de transfert d'une partie de l'échantillon vers d'autres fonctions, telles que fragmentation, marquage, hybridation sur puce biologique ou biopuce et lecture pour analyse finale.

La présente invention décrite sur les figures est particulièrement destinée à permettre une analyse d'un échantillon en biologie moléculaire. Elle concerne une carte 1 qui comporte un bord 2 délimitant deux surfaces planes parallèles l'une par rapport à l'autre, non référencées sur les figures.

Sur la figure 1, on remarque que la partie supérieure de ladite carte 1 est constituée par un trottoir 3 qui comporte sur toute sa longueur un certain nombre de repères optiques 4. On note également sur les côtés de la carte 1, c'est-à-dire au niveau du bord 2, la présence d'un certain nombre d'orifices. Sur la partie gauche, est présent un orifice d'entrée d'un échantillon à analyser 5. Sur la partie droite de ladite carte 1, on remarque également la présence de trois orifices dont l'un, référence 65, fait office de sortie d'une partie de l'échantillon à analyser. En fait, la carte 1, une fois utilisée, contient toujours une partie de l'échantillon analysé. Seule, la portion restante va pouvoir sortir pour effectuer d'autres analyses.

Plus précisément, ladite carte 1 représentée sur cette figure 1, se situe entre une étape initiale où des cellules biologiques sont détruites au niveau de leurs membranes afin d'extraire l'ADN et/ou l'ARN qu'elles contiennent, il peut également et éventuellement y avoir une purification, et une étape finale où les acides nucléiques sont testés sur des biopuces à ADN ou ARN par hybridation et détection.

Un tel procédé d'extraction, selon l'étape initiale, peut être par exemple décrit dans les demandes de brevets FR97/12164 déposée le 23 septembre 1997 et FR98/09583 déposée le 23 juillet 1998 par la demanderesse. Afin que l'extraction soit plus efficace, il est également possible d'effectuer une purification de l'échantillon, selon la demande de brevet FR98/04878 déposée le 10 avril 1998 par la demanderesse.

Selon l'étape finale, les acides nucléiques sont ensuite traités, par fragmentation et/ou marquege, afin d'être détectable sur une biopuce. C'est ce qui est bien décrit dans la demande de brevet FR98/07870 déposée le 17 juin 1998.

La carte, selon l'invention, permet d'analyser l'ADN et/ou l'ARN extrait selon les procédés évoqués précédemment. Ainsi, on remarque sur cette figure 1, qu'il y a sensiblement, comme cela est représenté à droite, quatre niveaux A à D au sein de la carte 1. Bien entendu, ces niveaux ne sont pas limitatifs, c'est-à-dire qu'il est possible d'avoir plus de compartiments ou plus de vanne ou autres, en fonction d'une analyse complémentaire que l'on veut effectuer. Sur cette figure, l'échantillon à analyser est traité du haut vers le bas, ceci n'est pas limitatif.

Ainsi, la partie A de la carte 1 constitue le premier niveau où l'ADN et/ou l'ARN est dénaturé c'est-à-dire que les deux brins d'ADN sont séparés les uns des autres et/ou que le brin d'ARN est « nettoyés », c'est-à-dire que les structures secondaires sont éliminées.

Dans une deuxième étape, la partie B de la carte 1 constitue le deuxième niveau qui est un niveau de capture, c'est-à-dire que les ADN et/ou ARN sont capturés par des particules magnétiques elles-mêmes aimantées. Ces particules magnétiques ne sont pas représentées sur ces figures. Au niveau de ce deuxième niveau, il est également possible d'effectuer un lavage pour éliminer les substances qui n'ont pas été capturées par les particules magnétiques aimantées et qui ne nous intéressent donc pas. On effectue à la fin de cette étape un relargage des ADN et/ou ARN par rapport aux particules magnétiques par une action chimique par exemple ; puis les particules magnétiques sont ensuite aimantées seules, ce qui permet de libérer les acides nucléiques qui passent dans le troisième niveau

Ce troisième niveau C est divisé en deux étapes distinctes, qui sont réalisées selon deux compartiments situés côte à côte. Dans le premier compartiment, on effectue un mélange avec des substances nécessaires à l'amplification, substances bien connues de l'homme du métier, tel que oligonucléotides, amorces et autres et un second compartiment où est présente une enzyme permettant d'amplifier le mélange acides nucléiques cibles avec amorces et oligonucléotides etc.

Lorsque l'amplification est réalisée dans la partie C, les transcrits sont transférés dans la partie D où est effectuée une lecture en présence éventuellement d'un marqueur. Cette lecture, en fonction du résultat positif ou négatif, va entraîner le transfert ou non d'une partie de l'échantillon biologique récupéré, tout en bas de cette carte 1, via la sortie 65 vers une autre carte ou un prolongement de cette même carte.

D'ailleurs, il convient de signaler que l'étape initiale d'extraction d'ADN et même de purification peut être effectuée soit sur une carte complémentaire et/ou un autre appareil, soit sur un prolongement de cette même carte 1. Le transfert d'une carte d'analyse vers une autre carte d'analyse est décrit dans la demande de brevet FR98/11383 déposée le 8 septembre 1998 par la demanderesse.

Lorsque l'échantillon est en partie sorti au niveau de la sortie 65, il est récupéré afin de permettre de traiter les ADN et/ou ARN pour qu'ils puissent être mis en contact avec une biopuce, comme cela est expliqué dans la demande de brevet FR98/07870 déposée le 17 juin 1998 par la demanderesse.

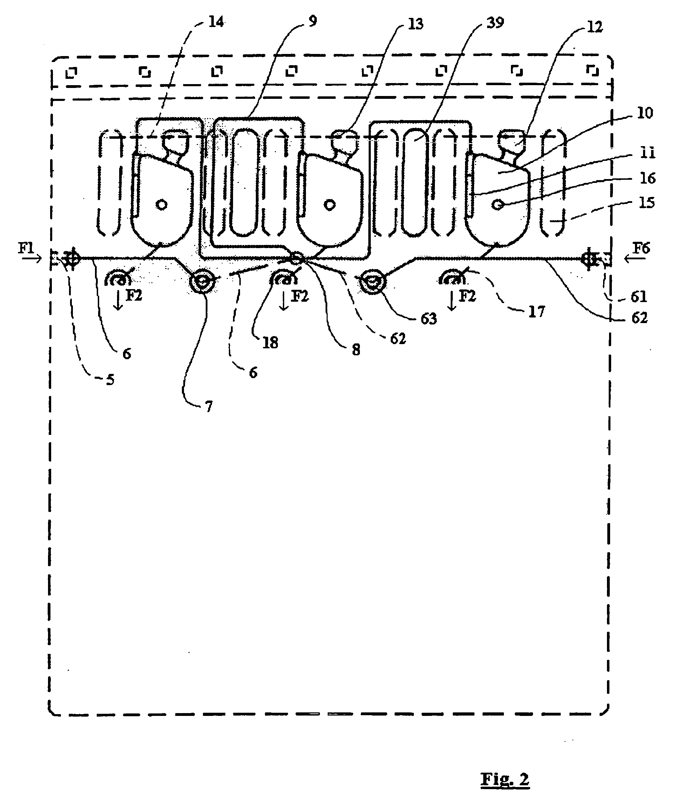

Les figures 2 à 5 montrent de manière plus précise et dans un contexte isolé chaque niveau A à D.

Le niveau A est bien représenté à la figure 2. On remarque qu'au niveau de l'entrée 5 de l'échantillon à analyser, est présent un canal d'entrée 6 dans lequel l'échantillon liquide peut pénétrer selon F1.

Il convient de noter dès à présent que sur ces figures l'ensemble des traits, représentés en traits pleins, sont situés sur la face avant de la carte 1, alors que les traits discontinus représentent des éléments situés sur la face arrière de la carte 1. Néanmoins, il est tout à fait possible d'envisager d'effectuer des trous traversants pour certains éléments tels que les compartiments, c'est par exemple le cas ici pour les compartiments d'isolation thermique 39 et 59, cela sera exposé plus avant par la suite.

Le flux F1 liquide de l'échantillon va donc pénétrer à l'intérieur de la carte 1 lorsque la vanne 7 d'entrée sera ouverte. Une telle vanne est décrite dans la demande de brevet FR98/11383 déposée le 8 septembre 1998 par la demanderesse, déjà évoquée ci-dessus. Une fois passée la vanne 7, le canal 6 se prolonge jusqu'à un séparateur 8 de l'échantillon, séparateur 8 qui fait office d'éclateur et de répartiteur de l'échantillon entre l'ensemble des chaînes réactionnelles. Sur le mode de réalisation représenté sur ces figures, on remarque qu'il y a trois chaînes réactionnelles. Bien entendu, il est nécessaire que la répartition du liquide soit équilibrée entre chaque chaîne réactionnelle. Pour se faire, la configuration de l'ensemble des canaux 9 de transfert primaire du premier niveau de la carte 1 située entre le séparateur 8 et chaque compartiment 10 de dénaturation de premier niveau, répond à un certain nombre de critères qui sont bien exposés dans la demande de brevet FR99/03035 déposée le 9 mars 1999 comme cela est bien représenté par exemple dans la figure 1 de cette demande. Ceci sera également vrai par la suite pour les autres niveaux B et C, le niveau D ayant un compartiment de convergence 60.

Chaque canal de transfert primaire 9 aboutit donc à un compartiment de dénaturation 10, celui-ci ayant une position qui facilite l'écoulement par simple gravité du liquide en son sein, tout en utilisant la capillarité par l'intermédiaire d'un moyen de drainage 11 qui a déjà fait l'objet de description dans les demandes de brevets FR99/03034 et FR99/03035 déposées le même jour soit le 9 mars 1999 par la demanderesse.

L'échantillon à analyser est donc guidé afin de tomber au fond du compartiment 10. Ce compartiment 10 est associé à un appareil permettant de casser les bulles 12 qui peuvent toujours être créées lors du passage d'un échantillon biologique dans de petits canaux 6, 9, etc.

Cet appareil 12 comporte un orifice de communication 13 qui relie l'appareil 12 à deux volumes tampon 15 situés de part et d'autres du compartiment 10. La communication s'effectue entre l'orifice 13 et les volumes tampon 15 par l'intermédiaire d'un canal de communication 14. L'appareil pour casser les bulles 12, l'orifice de communication 13, le canal de communication 14 et le volume tampon 15 sont déjà bien décrits dans la demande de brevet FR99/03035 déjà citée ci-dessus.

La seule différence réside dans le positionnement des deux volumes tampon 15 par rapport au compartiment 10. On remarque d'ailleurs sur cette figure qu'entre deux compartiments 10 adjacents, sont présents deux volumes tampon 15 mais également entre les deux volumes tampon 15 adjacents un compartiment 39 d'isolation thermique du premier niveau. Cette configuration permet d'avoir entre deux compartiments 10 adjacents trois volumes d'air qui font office d'isolateurs thermiques étant donné que dans ce premier niveau est effectuée une dénaturation de l'ADN et/ou de l'ARN qui nécessite une montée en température allant de 90 à 100°C. Ceci permet d'éviter des échauffements trop importants au niveau des échantillons liquides et biologiques pouvant non seulement dénaturer mais détruire les acides nucléiques que l'on souhaite analyser.

Le volume des compartiments 10 étant très important, on note la présence au centre de chaque compartiment 10 d'un plot 16 qui assure la rigidification d'un film flexible situé sur la face avant de la carte 1, et qui permet de délimiter le réseau de canalisations et de compartiments. Ce dispositif a déjà été décrit dans la demande de brevet évoquée précédemment FR99/03035.

La carte 1 fonctionne sensiblement dans une position verticale, l'échantillon à analyser qui a été introduit dans chaque compartiment 10 doit être positionné dans la partie basse de ce compartiment 10. A ce niveau est présent un canal de transfert secondaire du premier niveau référencé 17. Ce canal permet de transférer les aliquotes de l'échantillon du premier niveau A vers le second niveau B via une vanne d'accès 18 à ce deuxième niveau B. Le liquide est évacué selon F2.

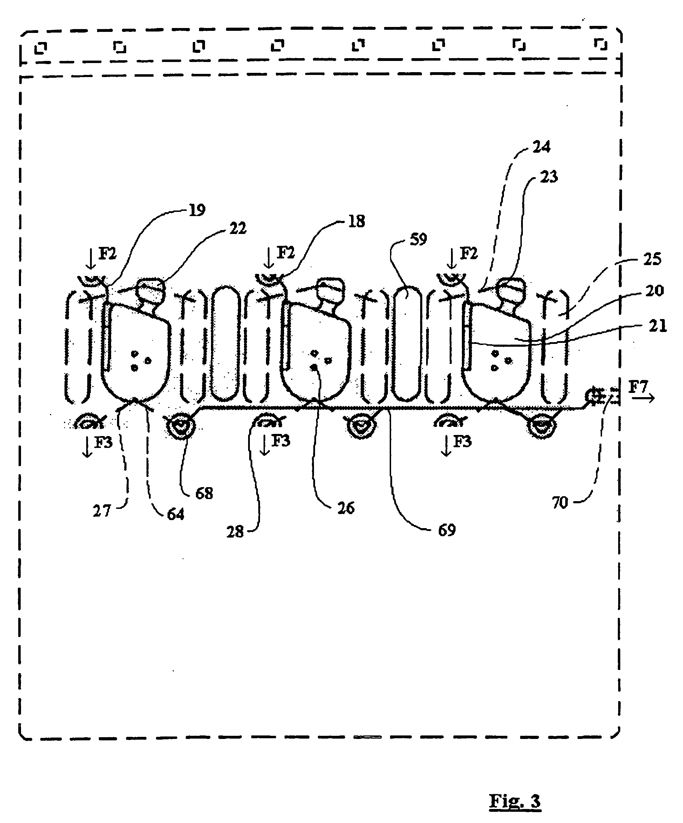

Sur la figure 3, est représenté de manière explicite le deuxième niveau B, où l'on retrouve la vanne 18 et l'échantillon à analyser sous forme d'aliquotes en trois parties qui est introduit selon F2. Après cette vanne 18, est présent un canal de transfert primaire 19 du second niveau B qui permet le transit de l'échantillon biologique depuis la vanne 19 vers le compartiment de capture 20. On retrouve à ce niveau sensiblement les mêmes caractéristiques qu'au premier niveau à savoir un moyen de drainage 21, un appareil pour casser les bulles 22, un orifice de communication 23, orifice de communication permettant de relier, via un canal de communication 24, l'appareil 22 à deux volumes tampon 25.

On remarque par contre qu'il n'y a pas un seul plot de rigidification au centre du compartiment 20 mais trois petits plots 26 formant ensemble un triangle sensiblement isocèle. Cette configuration est particulièrement intéressante puisque à ce niveau lorsque la carte 1 n'est pas encore utilisée, une pastille est présente qui est circonscrite géographiquement entre ces plots 26, pastille qui n'est pas représentée sur ces figures. Cette pastille est en fait constituée de particules magnétiques agglomérées qui vont être utilisées par la suite dans le procédé.

L'objectif de cette configuration est de permettre un écoulement de chaque aliquote de l'échantillon à analyser au sein du compartiment 20 sans que les particules magnétiques soient dissoutes immédiatement et ne viennent ainsi remplir dès le départ les canaux sous-jacents. Ladite carte 1 est bien entendu en position sensiblement verticale ou inclinée comme c'était le cas précédemment et comme cela sera le cas par la suite.

En fait, il faut pour que la pastille de particules magnétiques soit dissoute que le niveau de liquide soit suffisamment haut pour atteindre le premier plot 26. Ceci retarde la dissolution des particules magnétiques, ce qui est particulièrement avantageux.

On remarque également en partie inférieure la présence de deux canaux qui permettent de diriger l'échantillon biologique ou tout autre liquide qui viendrait à transiter par le compartiment 20. Il s'agit pour chaque compartiment 20 d'une vanne 28 située à gauche, et d'une vanne 68 située à droite. La vanne 28 permet l'accès au troisième niveau à un liquide sortant selon F3. Ce transfert s'effectue par l'intermédiaire d'un canal de transfert secondaire du deuxième niveau référencé 27. Le second circuit est en fait constitué par un canal individuel de sortie 64 du liquide, quel qu'il soit, situé dans le compartiment 20, ce canal se termine au niveau d'une vanne de sortie du deuxième niveau 68 qui est reliée elle-même à un canal collectif de sortie 69 de ce deuxième niveau B.

En fait, l'ensemble des canaux 64 aboutissent tous à ce canal 69 qui est collectif et peuvent tous être ouverts ou fermés indépendamment par des vannes 68 portées par chaque canal 64. Le canal 69 aboutit à une sortie 70 qui permet l'évacuation selon F7 de n'importe quel liquide situé dans le compartiment 20. L'objectif de ce deuxième circuit 64, 68, 69 et 70, est de permettre d'effectuer, d'une part, une mise sous vide de l'ensemble des premiers et seconds niveaux, ce qui permet après avoir créer le vide de refermer l'ensemble des vannes 68 et, d'autre part, le transit sans autre énergie du liquide quel qu'il soit, c'est-à-dire de l'échantillon biologique à tester ou du liquide de lavage. De plus ce circuit permet d'effectuer également un lavage, qui est utilisé dans ce circuit référencé 64 et 68 à 70. Ainsi, lorsque les particules magnétiques sont dissoutes dans l'échantillon à analyser, les particules magnétiques vont pouvoir fixer, sur leur périphérie, les acides nucléiques. De telles particules magnétiques ont par exemple été décrites dans les demandes de brevet WO-A-97/45202 déposée sous priorité du 24 mai 1996 et PCT/FR99/00011 déposée sous priorité du 6 janvier 1998 par la demanderesse.

Lorsque les acides nucléiques sont fixés sur les particules magnétiques, il est possible par aimantation sensiblement perpendiculaire au plan de la carte 1 d'immobiliser les particules magnétiques ainsi associées aux acides nucléiques sur les parois da la carte 1 ou du film flexible et d'effectuer un rinçage, tout simplement par introduction d'un liquide soit par l'ouverture d'entrée 5 évoquée précédemment mais éventuellement et préférentiellement par l'entrée 61 d'un fluide inerte qui permet le lavage de l'ensemble des niveaux A et B, l'évacuation du fluide s'effectuant bien entendu au niveau de la sortie 70 selon F7. En fait, l'introduction d'un fluide inerte selon F6 au niveau de l'entrée 61 est préférable, car il s'agit d'un réseau en association avec le canal 62 d'entrée du fluide inerte et de la vanne d'entrée 63 d'un fluide inerte qui est complètement indépendant du réseau d'entrée de l'échantillon à analyser ce qui est un gage de sécurité pour l'analyse ultérieure à réaliser.

Il est à noter que le canal 62 aboutit au séparateur de l'échantillon 8, ce qui va permettre l'ensemble de ce nettoyage des niveaux A et B.

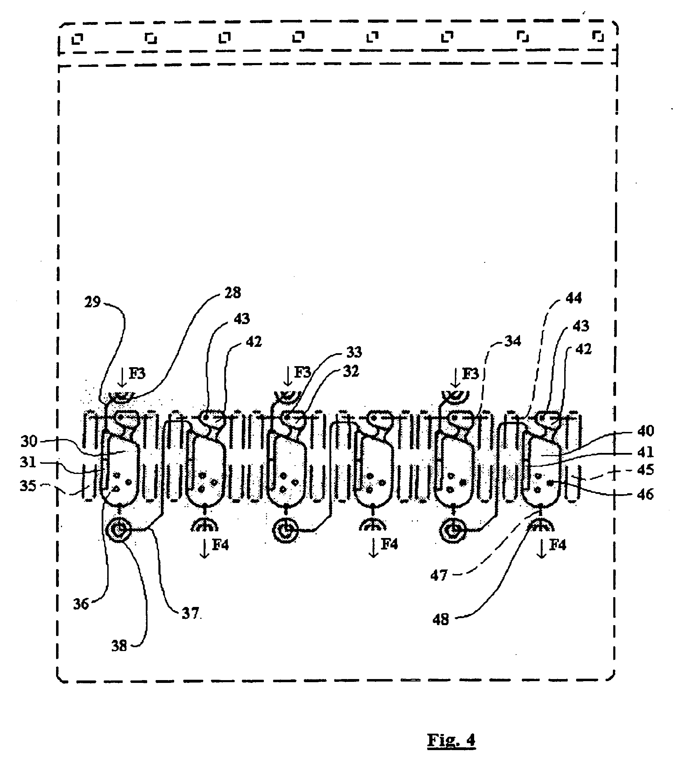

Par l'intermédiaire de la vanne 28, le liquide à analyser va ensuite être transférer selon F3 vers le troisième C, c'est ce qui est bien représenté sur la figure 4. Ainsi, les trois aliquotes de l'échantillon à analyser passent selon F3 au travers de la vanne 28 ouverte et se dirigent vers le compartiment 30 via le canal de transfert primaire 29 du troisième niveau C de ladite carte 1.

On remarque dans ce troisième niveau C, la présence d'un nombre deux fois supérieur de compartiments puisque chaque ligne réactionnelle comporte en série deux petits compartiments référencés 30 et 40 dont les fonctions seront décrites plus loin. Le compartiment 30 est identique au compartiment 40. Ils comportent tous les deux des caractéristiques semblables aux compartiments décrits précédemment et référencés 10 et 20. On note par exemple la présence des moyens de drainage 31 et 41, des appareils pour casser les bulles 32 et 42, des orifices de communication 33 et 43, des canaux de communication 34 et 44 situés entre l'appareil 32 ou 42 et deux compartiments tampon 35 et 45 pour chaque canal 34 et 44. Ces dispositions sont semblables aux compartiments précédents.

De manière interne aux compartiments 30 ou 40, on remarque la présence de plots 36 et 46, qui sont semblables au deuxième niveau B et aux plots 26, c'est-à-dire qu'il y a pour chaque compartiment 30 ou 40 trois plots 36 ou 46, ces plots formant les sommets d'un triangle isocèle pouvant contenir une pastille de produit qui sera explicitée plus loin.

Entre les deux compartiments 30 et 40 de chaque ligne de réaction est présent un canal de transfert intermédiaire 37 du troisième niveau C. Le long de ce canal est disposé une vanne 38 qui permet l'accès au second compartiment 40 du troisième niveau C. En fait et comme ceci est le cas précédemment, le canal 37 relie la partie inférieure du premier compartiment 30 à la partie sensiblement supérieure du second compartiment 40. En partie inférieure du compartiment 40, est présent un canal de transfert secondaire 47 du troisième niveau C de la carte 1. Ce canal 47 aboutit à une vanne 48 qui permet l'accès au quatrième niveau D. A ce niveau, l'échantillon à analyser sort selon F4.

Comme évoqué précédemment, chaque compartiment 30 et 40 comporte en son sein une pastille de produit, l'ensemble des compartiments 30 et 40 ayant pour fonction d'amplifier les ADN et/ou ARN qui ont été extraits, dénaturés et capturés aux étapes précédentes. Pour se faire, le premier compartiment 30 comporte au sein de ses plots 36, une pastille contenant des produits permettant l'amplification comme des oligonucléotides ou des amorces d'amplification éventuellement munies de promoteurs, etc. A ce niveau, le mélange s'effectue par dilution lorsque le liquide monte dans le compartiment 30 et vient au contact de cette pastille comme cela a été décrit précédemment au deuxième niveau B avec les particules magnétiques. C'est également le cas au niveau du second compartiment 40 où les plots 46 contiennent une autre pastille qui elle renferme l'enzyme qui va permettre d'activer la réaction d'amplification.

Il faut remarquer qu'au niveau du troisième niveau C, les compartiments d'isolation thermique 39 et 59 ne sont pas présents. Ceux-ci ont été décrits pour les premier et deuxième niveaux. La raison est qu'il n'y a pas de température importante à exercer au niveau de cette amplification, lorsque l'on utilise par exemple une technique d'amplification transcriptionnelle, telle que la TMA. Bien entendu, on pourrait utiliser tout autre technique d'amplification comme la PCR, auquel il peut être nécessaire d'ajouter également et à l'instar des niveaux A et B ces compartiments d'isolation thermique 39 et 59 décrits précédemment.

Le niveau D, qui constitue le quatrième niveau, est bien représenté sur la figure 5. On remarque à nouveau la présence de la vanne 48 et l'arrivée du liquide selon F4. A ce niveau, il existe un petit canal de transfert primaire 49 du quatrième niveau D. Ce canal 49 aboutit au compartiment de lecture 50 par l'intermédiaire d'un moyen de drainage 51. On remarque que la structure de ce compartiment est différente des compartiments 10, 20, 30 et 40 précédents.

On remarque la présence, perpendiculairement au canal de transfert 49, d'un canal de transfert secondaire 57 du quatrième niveau D. Le canal de transfert primaire étant en position sensiblement verticale ou inclinée, le liquide qui se déplace selon F4, aura tendance par simple gravité à privilégier le passage depuis la vanne 48 vers le compartiment 50. Il n'y aura donc pas à ce moment de transfert de fluide au niveau du canal 57. Le compartiment de lecture 50 va alors se remplir jusqu'au point supérieur dudit compartiment 50 où est présent un isolateur 56 qui est constitué d'un canal zigzaguant et comportant un certain nombre d'élargissements qui empêche le liquide, qui remplit le compartiment 50, de se déplacer au-delà de cet isolateur 56. Ainsi, l'isolateur 56 aboutit à un compartiment de convergence, également appelé compartiment final 60, situé tout en bas de la carte et qui se retrouve quasiment sur toute la largeur de ladite carte 1. Lorsque l'isolateur 56 effectue son rôle, le liquide qui arrive F4 va avoir rempli complètement le compartiment 50 et le reste de l'échantillon va ensuite passer par le canal de transfert secondaire 57 évoqué précédemment. Le compartiment 50 va donc être utilisé par la suite pour effectuer une lecture c'est-à-dire pour révéler si l'amplification a bien été effectuée à l'étape précédente, c'est-à-dire au niveau C.

L'ensemble des aliquotes d'échantillon qui passe par les canaux 57 se retrouve dans le compartiment de convergence 60. Le compartiment final 60, à l'instar des compartiments évoqués précédemment et référencés 10, 20, 30 et 40 mais non 50, comporte également un appareil pour casser les bulles 52 représenté sur la gauche de cette figure. Ce compartiment comporte également un orifice de communication 53 qui permet la communication entre l'appareil 52 et l'ensemble des volumes tampons 55. On remarque qu'il y a cinq volumes tampons 55, situés en arrière du plan de la carte, alors que l'isolateur 56 est dans ce plan. L'ensemble des volumes tampon 55 est relié à l'orifice 53 par l'intermédiaire d'un canal de communication 54.

Le compartiment de convergence 60 est assez volumineux d'où la présence d'un certain nombre de plots de rigidification 58 du film flexible, film qui est non représenté sur les figures.

A l'extrémité droite du compartiment de convergence 60 est présent un canal 66 appelé canal de sortie d'une partie de l'échantillon à analyser qui va être dirigé soit vers une autre partie de la carte 1 soit vers une autre carte comme cela est le cas sur la figure. Ainsi, le canal 66 remonte et aboutit à une vanne de sortie 67 elle-même en communication avec une sortie 65, par laquelle peut sortir une partie de l'échantillon à analyser selon F5.

### REFERENCES

1. Carte
2. Bord de la carte 1
3. Trottoir de la carte 1
4. Repère optique
5. Entrée de l'échantillon à analyser
6. Canal d'entrée de l'échantillon à analyser
7. Vanne d'entrée de l'échantillon à analyser
8. Séparateur de l'échantillon
9. Canal de transfert primaire du premier niveau de la carte 1
10. Compartiment de dénaturation ou de premier niveau
11. Moyen de drainage
12. Appareil pour casser les bulles
13. Orifice de communication entre l'appareil 12 et au moins un volume tampon 15
14. Canal de communication entre l'appareil 12 et au moins un volume tampon 15
15. Volume tampon
16. Plot de rigidification du film flexible
17. Canal de transfert secondaire du premier niveau de la carte 1
18. Vanne d'accès au deuxième niveau
19. Canal de transfert primaire du deuxième niveau de la carte 1
20. Compartiment de capture ou de deuxième niveau
21. Moyen de drainage
22. Appareil pour casser les bulles
23. Orifice de communication entre l'appareil 22 et au moins un volume tampon 25
24. Canal de communication entre l'appareil 22 et au moins un volume tampon 25
25. Volume tampon
26. Plot
27. Canal de transfert secondaire du deuxième niveau de la carte 1
28. Vanne d'accès au troisième niveau
29. Canal de transfert primaire du troisième niveau de la carte 1
30. Premier compartiment d'amplification du troisième niveau
31. Moyen de drainage
32. Appareil pour casser les bulles
33. Orifice de communication entre l'appareil 32 et au moins un volume tampon 35
34. Canal de communication entre l'appareil 32 et au moins un volume tampon 35
35. Volume tampon
36. Plot
37. Canal de transfert intermédiaire du troisième niveau de la carte 1
38. Vanne d'accès au second compartiment 40 du troisième niveau
39. Compartiment d'isolation thermique du premier niveau
40. Second compartiment d'amplification du troisième niveau
41. Moyen de drainage
42. Appareil pour casser les bulles
43. Orifice de communication entre l'appareil 42 et au moins un volume tampon 45
44. Canal de communication entre l'appareil 42 et au moins un volume tampon 45
45. Volume tampon
46. Plot
47. Canal de transfert secondaire du troisième niveau de la carte 1
48. Vanne d'accès au quatrième niveau
49. Canal de transfert primaire du quatrième niveau
50. Compartiment de lecture et de transfert du quatrième niveau
51. Moyen de drainage
52. Appareil pour casser les bulles
53. Orifice de communication entre l'appareil 52 et au moins un volume tampon 55
54. Canal de communication entre l'appareil 52 et au moins un volume tampon 55
55. Volume tampon
56. Isolateur du compartiment 50
57. Canal de transfert secondaire du quatrième niveau de la carte 1
58. Plot de rigidification du film flexible
59. Compartiment d'isolation thermique du deuxième niveau
60. Compartiment de convergence ou final
61. Entrée d'un fluide inerte pour déplacer l'échantillon à analyser ou laver
62. Canal d'entrée d'un fluide inerte
63. Vanne d'entrée d'un fluide inerte
64. Canal individuel de sortie du deuxième niveau de la carte 1
65. Sortie d'une partie de l'échantillon à analyser
66. Canal de sortie d'une partie de l'échantillon à analyser
67. Vanne de sortie de la carte 1
68. Vanne de sortie du deuxième niveau de la carte 1
69. Canal commun de sortie du deuxième niveau de la carte 1
70. Sortie associée au canal commun 69
   A. Partie de la carte constituant le premier niveau de dénaturation
   B. Partie de la carte constituant le deuxième niveau de capture
   C. Partie de la carte constituant le troisième niveau d'amplification
   D. Partie de la carte constituant le quatrième niveau de lecture et de transfert
   F1. Entrée de l'échantillon à analyser
   F2. Transferts des aliquotes de l'échantillon entre le premier et le second niveaux
   F3. Transferts des aliquotes de l'échantillon entre le second et le troisième niveaux
   F4. Transferts des aliquotes de l'échantillon entre le troisième et le quatrième niveaux
   F5. Transferts des aliquotes de l'échantillon entre le quatrième et le cinquième niveaux F6. Entrée d'un fluide inerte pour déplacer l'échantillon à analyser ou laver
   F7. Sortie d'une partie de l'échantillon à analyser

## Revendications

1. Carte d'analyse au sein de laquelle des chaînes réactionnelles et des transferts de fluides sont réalisés sous l'effet de moyens de contrôle internes à la carte (1) ; ladite carte (1) comporte :
• au moins deux chaînes réactionnelles en parallèle, chaque chaîne étant constituée d'au moins deux transferts de fluides en série,
• au moins deux vannes par chaîne réactionnelle, les vannes permettant de contrôler les transferts de fluides en série au sein d'un canal, d'un niveau initial (A, B, C) vers un niveau subséquent (B, C, D), chaque niveau correspondant à au moins un traitement ;
chaque vanne est constituée d'au moins un moyen qui peut être déformé par un actionneur et entraîner directement ou indirectement la fermeture dudit canal, tel qu'un film flexible recouvrant tout ou partie de la face supérieure et/ou inférieure de la carte d'analyse, et une translation de la position des deux vannes appartenant à deux chaînes réactionnelles différentes et permettant le transfert de fluides d'un premier niveau (A ou B) vers un deuxième niveau (B ou C) permet d'obtenir la position de deux vannes subséquentes appartenant à ces deux chaînes réactionnelles différentes et permettant le transfert de fluides du deuxième niveau (B ou C) vers un troisième niveau (C ou D), de sorte que :
➢ la distance entre deux vannes appartenant à ces deux chaînes réactionnelles est constante, quel que soit le niveau initial (A, B, C) à partir duquel le transfert de fluides contrôlé par lesdites vannes est effectué ;
➢ la distance entre les deux vannes appartenant à une même chaîne réactionnelle est constante d'une chaîne réactionnelle à l'autre.

2. Carte selon la revendication 1, **caractérisée par le fait que** chaque chaîne réactionnelle comprend au moins un compartiment de départ, un compartiment d'arrivée, un canal fluidique reliant les deux compartiments, la vanne positionnée sur ledit canal fluidique, permettant de contrôler sur ledit canal, un flux fluidique généré par un moyen de transfert, et que la disposition des vannes sur la carte d'analyse (1) permet le passage dudit flux fluidique entre le compartiment de départ et le compartiment d'arrivée simultanément dans l'ensemble des chaînes réactionnelles.

3. Carte d'analyse selon la revendication 2, **caractérisée par le fait que** les vannes sont disposées selon un axe sensiblement rectiligne et à équidistance les unes des autres.

4. Carte d'analyse selon la revendication 3, **caractérisée par le fait que** l'axe sensiblement rectiligne est perpendiculaire à un côté de la carte d'analyse (1).

5. Carte d'analyse selon l'une quelconque des revendications 2 à 4, **caractérisée par** le fait qu'au moins un des compartiments est associé à au moins un volume tampon, et que le volume tampon est situé sur la face opposée de la carte d'analyse par rapport au compartiment qui lui est associé.

6. Carte d'analyse selon l'une quelconque des revendications 1 à 5, **caractérisée par le fait que** chaque compartiment qui contient au moins un réactif, devant être mis en contact avec l'échantillon ou un aliquote de cet échantillon, comporte des moyens de maintien en position d'une pastille, constituée d'un agglomérat du ou des réactifs, le moyen de maintien en position étant à distance du fond dudit compartiment.

7. Carte d'analyse selon la revendication 6, **caractérisée par le fait qu'**au centre de tout ou partie des compartiments, sont présents de petits plots (26) de rigidification constituant les moyens de maintien en position, préférentiellement au nombre de trois, formant ensemble un triangle sensiblement isocèle.

8. Carte d'analyse selon la revendication 7, **caractérisée par le fait que** ces plots (26) circonscrivent géographiquement une pastille contenant des particules, préférentiellement des particules magnétiques.

9. Dispositif de mise en oeuvre d'une carte d'analyse (1) selon l'une des revendications 1 à 8, qui comporte au moins un actionneur par chaîne réactionnelle de la carte (1), et tous les actionneurs sont à une distance constante les uns des autres, et préférentiellement les actionneurs, portés par une même rampe, sont équidistants, le dispositif comporte des moyens d'avancement de la carte (1) par rapport aux actionneurs, et/ou il comporte des moyens d'avancement desdits actionneurs par rapport à ladite carte (1), et chaque actionneur peut être actionné indépendamment des autres.

10. Dispositif selon la revendication 9, **caractérisé par le fait que** les actions des actionneurs sur la carte (1) s'effectuent sensiblement perpendiculairement :
- à la surface de ladite carte (1), où les actionneurs agissent, et/ou
- aux mouvements de la carte (1) et de l'actionneur, l'un par rapport à l'autre.

11. Dispositif selon l'une quelconque des revendications 9 ou 10, **caractérisé par le fait que** l'ensemble des actionneurs est monté sur une seule rampe, et que la rampe est sensiblement rectiligne, sensiblement perpendiculaire aux mouvements des actionneurs, et/ou sensiblement perpendiculaire aux mouvements de la carte, et/ou du dispositif par rapport à la carte.

12. Procédé mettant en oeuvre la carte (1) selon l'une quelconque des revendications 1 à 8, et le dispositif selon l'une quelconque des revendications 9 à 11, **caractérisé en ce qu'**il consiste à effectuer les étapes suivantes :
- générer une variation de pression au sein de ladite carte (1) par rapport à l'extérieur, et préférentiellement une dépression,
- introduire au moins un échantillon à analyser dans la carte (1),
- faire transiter chaque échantillon ou aliquote d'échantillon en vue de l'analyse, et
- faire sortir de la ou conserver dans ladite carte (1) une partie de chaque échantillon introduit.

13. Procédé, selon la revendication 12, **caractérisé en ce que** l'analyse consiste à effectuer les opérations suivantes :
- dénaturation des ADN et/ou ARN,
- capture des ADN et/ou ARN sur des particules magnétiques,
- amplification desdits ADN et/ou ARN, et
- lecture de chaque échantillon ou aliquote d'échantillon en vue de savoir si l'amplification a eu lieu.

14. Procédé, selon la revendication 13, **caractérisé en ce que** l'analyse consiste préalablement à effectuer un extraction, par lyse cellulaire des cellules contenues dans un échantillon prélevé.

15. Procédé, selon la revendication 14, **caractérisé en ce que** l'analyse consiste préalablement à la dénaturation et après l'extraction, à effectuer une purification de l'échantillon extrait.

16. Procédé, selon l'une quelconque des revendications 13 à 15, **caractérisé en ce que** l'analyse consiste après l'amplification à analyser la nature des transcrits par hybridation sur une biopuce.

17. Procédé, selon l'une quelconque des revendications 12 à 16, **caractérisé en ce que** durant l'analyse, la carte fonctionne en position inclinée ou verticale.

18. Procédé, selon l'une quelconque des revendications 12 ou 17, **caractérisé par le fait que** la carte d'analyse se déplace pendant les différentes étapes et/ou opérations de manière séquentielle.

19. Procédé, selon la revendication 18, **caractérisé en ce que** la carte se déplace suivant deux axes perpendiculaires pour mettre en regard les vannes et les moyens d'actionnement des vannes.

## Claims

1. An analysis card within which reaction chains and fluid transfers are realised under the action of control means within the card (1); said card (1) comprises:
• at least two reaction chains in parallel, each chain being constituted by at least two fluid transfers in series,
• at least two valves per reaction chain, the valves enabling the control of the fluid transfers in series within a channel, from an initial level (A, B, C) towards a subsequent level (B, C, D), each level corresponding to at least one treatment;
each valve is constituted by at least one means which can be deformed by an actuator and can directly or indirectly cause the closure of said channel, such as a flexible film covering all or part of the upper and/or lower face of the analysis card, and a translation of the position of the two valves belonging to two different reaction chains and enabling the transfer of fluids from a first level (A or B) towards a second level (B or C) enables the position of two subsequent valves belonging to these two different reaction chains and enabling the transfer of fluids from the second level (B or C) towards a third level (C or D), to be obtained, such that:
➢ the distance between two valves belonging to these two reaction chains is constant, regardless of the initial level (A, B, C) from which the transfer of fluids controlled by said valves is effected;
➢ the distance between the two valves belonging to a same reaction chain is constant from one reaction chain to the other.

2. The card according to Claim 1, **characterised in that** each reaction chain includes at least one outlet compartment, one inlet compartment, one fluid channel linking the two compartments, with the valve being positioned on said fluid channel, enabling, in said channel, the control of a fluid flow generated by a transfer means, and that the arrangement of the valves on the analysis card (1) enables said fluid flow to pass between the outlet compartment and the inlet compartment simultaneously in all of the reaction chains.

3. The analysis card according to Claim 2, **characterised in that** the valves are arranged along a substantially rectilinear axis and equidistant to each other.

4. The analysis card according to Claim 3, **characterised in that** the substantially rectilinear axis is perpendicular to one side of the analysis card (1).

5. The analysis card according to any one of Claims 2 to 4, **characterised in that** at least one of the compartments is associated with at least one buffer volume, and that the buffer volume is located on the opposite face of the analysis card to the compartment associated with it.

6. The analysis card according to any of Claims 1 to 5, **characterised in that** each compartment which contains at least one reactant to be put in contact with the sample or an aliquot of this sample, comprises means for maintaining a pellet, constituted by an agglomerate of the reactant(s), in position, the position maintaining means being at a distance from the bottom of said compartment.

7. The analysis card according to Claim 6, **characterised in that**, in the centre of all or some of the compartments, small rigidifying studs (26) constituting the position maintaining means are present, there preferably being a total of three, which collectively form a substantially isosceles triangle.

8. The analysis card according to Claim 7, **characterised in that** these studs (26) geographically circumscribe a pellet containing particles, preferably magnetic particles.

9. A device for implementing an analysis card (1) according to one of Claims 1 to 8, which comprises at least one actuator per reaction chain of the card (1), and all of the actuators are at a constant distance from each other, and preferably the actuators, borne on a same strip, are equidistant, the device comprises means for moving the card forward (1) in relation to the actuators, and/or it comprises means for moving forward said actuators in relation to said card (1), and each actuator can be actuated independently of the others.

10. The device according to Claim 9, **characterised in that** the operations of the actuators on the card (1) are effected substantially perpendicularly:
- to the surface of said card (1), where the actuators operate, and/or
- to the movements of the card (1) and of the actuator, in relation to each other.

11. The device according to any one of Claims 9 or 10, **characterised in that** all of the actuators are mounted on a single strip, and that the strip is substantially rectilinear, substantially perpendicular to the movements of the actuators, and/or substantially perpendicular to the movements of the card, and/or of the device in relation to the card.

12. A method implementing the card (1) according to any one of Claims 1 to 8, and the device according to any one of Claims 9 to 11, **characterised in that** it consists in effecting the following steps:
- generating a pressure variation within said card (1) in relation to the outside, and preferably a depression,
- introducing at least one sample to be analysed into the card (1),
- causing the displacement of each sample or aliquot of the sample with a view to analysis, and
- causing a part of each sample introduced to exit from said card (1) or retaining it therein.

13. The method according to Claim 12, **characterised in that** the analysis consists in effecting the following operations:
- denaturing the DNA and/or RNA,
- capturing the DNA and/or RNA on magnetic particles,
- amplifying said DNA and/or RNA, and
- reading each sample or sample aliquot with a view to finding out whether amplification has occurred.

14. The method according to Claim 13, **characterised in that** the analysis consists firstly in effecting an extraction, by cellular lysis of the cells contained in a sample taken.

15. The method according to Claim 14, **characterised in that** the analysis consists firstly in denaturing and, after extraction, in effecting a purification of the extracted sample.

16. The method according to any one of Claims 13 to 15, **characterised in that** the analysis consists, after amplification, in analysing the nature of the transcripts by hybridisation on a biochip.

17. The method according to any one of Claims 12 to 16, **characterised in that**, during the analysis, the card operates in an inclined or vertical position.

18. The method according to any one of Claims 12 or 17, **characterised in that** the analysis card moves during the different steps and/or operations in a sequential manner.

19. The method according to Claim 18, **characterised in that** the card shifts along two perpendicular axes in order to bring the valves and the valve actuation means into an opposing relationship with each other.

## Patentansprüche

1. Eine Analysekarte, innerhalb welcher Reaktionsketten und Transfers von Fluiden unter der Wirkung von internen Steuerungsmitteln der Karte (1) ausgeführt werden; wobei die Karte (1) Folgendes umfasst:
• mindestens zwei parallele Reaktionsketten, wobei jede Kette aus wenigstens zwei Transfers von Fluiden in Serie gebildet wird,
• mindestens zwei Ventile je Reaktionskette, wobei die Ventile gestatten, die Transfers von Fluiden in Serie im Innern eines Kanals zu steuern, von einem Anfangsniveau (A, B, C) zu einem nachfolgenden Niveau (B, C, D), wobei jedes Niveau mindestens einer Behandlung entspricht;
wobei jedes Ventil aus wenigstens einem Mittel besteht, welches durch einen Aktuator verformt werden und direkt oder indirekt die Schließung des Kanals veranlassen kann, wie ein flexibler Film, welcher alles oder einen Teil der oberen und/oder der unteren Fläche der Analysekarte überzieht, und eine Translation der Position der beiden Ventile, welche zu zwei unterschiedlichen Reaktionsketten gehören und den Transfer von Fluiden von einem ersten Niveau (A oder B) zu einem zweiten Niveau (B oder C) gestatten, erlaubt, die Position von zwei nachfolgenden Ventilen zu erhalten, welche zu diesen beiden unterschiedlichen Reaktionsketten gehören und den Transfer von Fluiden von dem zweiten Niveau (B oder C) zu einem dritten Niveau (C oder D) gestatten, so dass:
➢ die Entfernung zwischen zwei Ventilen, welche zu diesen beiden Reaktionsketten gehören, konstant ist, ungeachtet des Anfangsniveaus (A, B, C), von welchem aus der durch die Ventile gesteuerte Transfer von Fluiden erfolgt;
➢ die Entfernung zwischen den beiden Ventilen, welche zu einer selben Reaktionskette gehören, von einer Reaktionskette zur anderen konstant ist.

2. Karte nach Anspruch 1, **dadurch gekennzeichnet, dass** jede Reaktionskette wenigstens ein Anfangsfach, ein Ankunftsfach und einen fluidischen Kanal aufweist, welcher die beiden Fächer verbindet, wobei das auf dem fluidischen Kanal angeordnete Ventil gestattet, auf dem Kanal einen durch ein Transfermittel erzeugten fluidischen Strom zu steuern, und dass die Anordnung der Ventile auf der Analysekarte (1) den Durchfluss des fluidischen Stroms zwischen dem Anfangsfach und dem Ankunftsfach simultan in der Gesamtheit der Reaktionsketten erlaubt.

3. Analysekarte nach Anspruch 2, **dadurch gekennzeichnet, dass** die Ventile entsprechend einer im Wesentlichen geradlinigen Achse und äquidistant zueinander angeordnet sind.

4. Analysekarte nach Anspruch 3, **dadurch gekennzeichnet, dass** die im Wesentlichen geradlinige Achse zu einer Seite der Analysekarte (1) senkrecht ist.

5. Analysekarte nach einem der Ansprüche 2 bis 4, **dadurch gekennzeichnet, dass** mindestens eines der Fächer mit mindestens einem Puffervolumen verbunden ist, und dass das Puffervolumen auf der gegenüberliegenden Seite der Analysekarte im Bezug auf das Fach liegt, welches mit ihm verbunden ist.

6. Analysekarte nach einem der Ansprüche 1 bis 5, **dadurch gekennzeichnet, dass** jedes Fach, welches mindestens ein Reagens enthält, welches mit der Probe oder einem Teil dieser Probe in Kontakt gebracht werden muss, Mittel zum In-Position-Halten eines Pellets aufweist, welches aus einer Anhäufung des oder der Reagenzien besteht, wobei sich das Mittel zum In-Position-Halten in Entfernung vom Boden des Fachs befindet.

7. Analysekarte nach Anspruch 6, **dadurch gekennzeichnet, dass** in der Mitte jedes oder eines Teils der Fächer kleine Kontakte (26) zur Versteifung vorhanden sind, welche die Mittel zum In-Position-Halten bilden, und zwar vorzugsweise drei an der Zahl, welche gemeinsam ein im Wesentlichen gleichschenkliges Dreieck bilden.

8. Analysekarte nach Anspruch 7, **dadurch gekennzeichnet, dass** diese Kontakte (26) geographisch ein Pellet umschreiben, welches Teilchen enthält, und zwar vorzugsweise magnetische Teilchen.

9. Eine Vorrichtung zur Implementierung einer Analysekarte (1) nach einem der Ansprüche 1 bis 8, welche mindestens einen Aktuator je Reaktionskette der Karte (1) aufweist, und alle Aktuatoren befinden sich in einer konstanten Entfernung zueinander, und vorzugsweise sind die Aktuatoren, die von einer selben Rampe getragen werden, äquidistant, die Vorrichtung umfasst Mittel zum Vorwärtsbewegen der Karte (1) im Bezug auf die Aktuatoren, und/oder sie umfasst Mittel zum Vorwärtsbewegen der Aktuatoren im Bezug auf die Karte (1), und jeder Aktuator kann unabhängig von den anderen betätigt werden.

10. Vorrichtung nach Anspruch 9, **dadurch gekennzeichnet, dass** die Aktionen der Aktuatoren auf der Karte (1) im Wesentlichen senkrecht erfolgen:
- an der Oberfläche der Karte (1), wo die Aktuatoren agieren, und/oder
- bei den Bewegungen der Karte (1) und des Aktuators, und zwar im Bezug zueinander.

11. Vorrichtung nach Anspruch 9 oder 10, **dadurch gekennzeichnet, dass** die Gesamtheit der Aktuatoren auf einer einzigen Rampe angebracht ist, und dass die Rampe im Wesentlichen geradlinig ist, im Wesentlichen senkrecht zu den Bewegungen der Aktuatoren und/oder im Wesentlichen senkrecht zu den Bewegungen der Karte, und/oder der Vorrichtung im Bezug auf die Karte.

12. Ein Verfahren zur Implementierung der Karte (1) nach einem der Ansprüche 1 bis 8, und der Vorrichtung nach einem der Ansprüche 9 bis 11, **dadurch gekennzeichnet, dass** dieses in der Ausführung der folgenden Schritte besteht:
- Erzeugen einer Druckvariation innerhalb der Karte (1) im Bezug auf das Äußere, und vorzugsweise eines Unterdrucks,
- Eingeben mindestens einer zu analysierenden Probe in die Karte (1),
- Durchlaufen lassen jeder Probe oder Teilprobe in Anbetracht der Analyse, und
- Herauslassen aus oder Aufbewahren in der Karte (1) eines Teils jeder eingegebenen Probe.

13. Verfahren, nach Anspruch 12, **dadurch gekennzeichnet, dass** die Analyse in der Durchführung der folgenden Vorgänge besteht:
- Denaturierung der DNAs und/oder RNAs,
- Einfangen der DNAs und/oder RNAs auf den magnetischen Teilchen,
- Amplifizierung der DNAs und/oder RNAs, und
- Lesen jeder Probe oder Teilprobe, um zu erfahren, ob die Amplifizierung stattgefunden hat.

14. Verfahren, nach Anspruch 13, **dadurch gekennzeichnet, dass** die Analyse vorab im Durchführen einer Extraktion besteht, und zwar durch Zelllyse der in einer entnommenen Probe enthaltenen Zeiten.

15. Verfahren, nach Anspruch 14, **dadurch gekennzeichnet, dass** die Analyse vorab in der Denaturierung und danach der Extraktion besteht, um eine Reinigung der extrahierten Probe durchzuführen.

16. Verfahren, nach einem der Ansprüche 13 bis 15, **dadurch gekennzeichnet, dass** die Analyse nach der Amplifizierung darin besteht, die Art der Transkripte durch Hybridisierung auf einem Biochip zu analysieren.

17. Verfahren, nach einem der Ansprüche 12 bis 16, **dadurch gekennzeichnet, dass**, während der Analyse, die Karte in geneigter oder vertikaler Position funktioniert.

18. Verfahren, nach einem der Ansprüche 12 oder 17, **dadurch gekennzeichnet, dass** die Analysekarte sich während der verschiedenen Etappen und/oder Vorgänge in sequentieller Weise verlagert.

19. Verfahren, nach Anspruch 18, **dadurch gekennzeichnet, dass** die Karte sich entsprechend zwei senkrechten Achsen verlagert, um die Ventile und die Mittel zur Betätigung der Ventile einander gegenüber zu bringen.
